# EUROPEAN PATENT SPECIFICATION

(11) **EP 1 385 140 B1**
(45) Date of publication and mention of the grant of the patent: **29.12.2010**
(21) Application number: 03016343.0
(22) Date of filing: 18.07.2003
(51) Int. Cl.: G09G 3/36

(54) **Reflective liquid crystal display and driving method thereof**
Reflektierende Flüssigkristallanzeigevorrichtung und Verfahren zu ihrer Ansteuerung
Dispositif d'affichage à cristaux liquides du type réflectif avec son procédé de commande

(30) Priority: 23.07.2002 KR 2002043413
(43) Date of publication of application: 28.01.2004
(73) Proprietor: SAMSUNG ELECTRONICS CO., LTD., Suwon-City, Kyungki-do (KR)
(72) Inventor: Lee, Hong-seok, Bundang-gu, Sungam-city, Gyunggi-do (KR); Lee, Suk-han, Suji-eub, Youngin-city, Gyunggi-do (KR); Kim, Ji-deog, Gangnam-gu, Seoul (KR); Moon, Il-kwon, Suwon-city, Gyunggi-do (KR)
(74) Representative: Grünecker, Kinkeldey, Stockmair & Schwanhäusser Anwaltssozietät

(56) References cited:
- EP-A- 1 359 459
- WO-A-00/77566
- US-A1- 2002 093 480
- WU S & AL: "Desing of a Reflective Color LCD Using Optical Interference Reflectors" ASIA DISPLAY, 16 October 1995 (1995-10-16), pages 929-930, XP002148248

## Description

### BACKGROUND OF THE INVENTION

### 1. Field of the Invention

The present invention relates to a liquid crystal display (LCD) and a driving method thereof. More particularly, the present invention relates to a reflective LCD and a driving method thereof that improves the luminance of the display by scanning a panel with white light at a predetermined time interval.

### 2. Background of the Related Art

Generally, a liquid crystal display (LCD) may be classified as either a transmissive LCD or a reflective LCD.

A transmissive LCD transmits a light emitted from a light source through an ITO ("Indium Tin Oxide") transparent electrode panel having high transmittance to display an image. On the contrary, a reflective LCD does not have a separate light source, instead it uses natural light to display an image on a panel. It may be possible to use a metal having a high reflectance, such as aluminum, as a common electrode instead of a transparent electrode. Since a reflective LCD does not require a separate light source, it has advantages of low power consumption, compact size, and lightweight capability.

The reflective LCD, however, has a disadvantage in that it is not capable of displaying an image on the panel in a low light level environment. This is because light incident on the LCD is filtered through a color filter and only a part of the incident light is reflected, thereby decreasing the luminance.

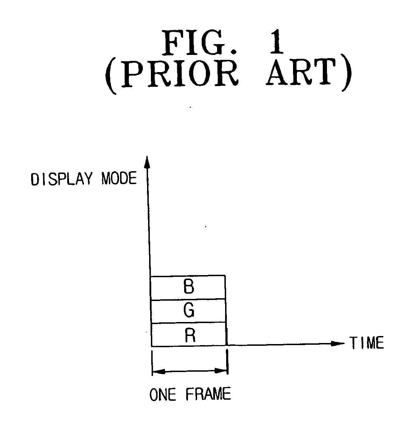

More particularly, red light, green light and blue light, which are filtered through respective color filters for a predetermined period of time "t," are mixed together to display a desired color. Each of the red, green and blue light is only a part of the incident white light as shown in FIG. 1, and thus the luminance thereof is low. To minimize this low luminance problem, a conventional reflective LCD adjusts a transmittance spectrum of color filters. However, this adjustment causes another problem, i.e., the color purity of an image is lowered.

US 2002/0093480 A1 discloses a full-color liquid crystal display device with a plurality of pixels in which a control means divides a frame period in a first period for displaying a full-color image by successively illuminating the display with red, green and blue light and a second period for placing the device in a non-display status, thus effectively suppressing an after image phenomenon adversely affecting a full-color image display in a subsequent frame period.

### SUMMARY OF THE INVENTION

A feature of an embodiment of the present invention is to solve at least the above problems, minimize the above-described disadvantages and to provide at least the advantages described hereinafter.

Accordingly, it is a feature of an embodiment of the present invention to provide a reflective LCD and a driving method thereof which do not require a specific design for regulating a transmittance spectrum of a color filter. Furthermore, it provides a capability of adjusting the luminance of an image.

The foregoing and other features and advantages are provided by a liquid crystal display (LCD), including an LCD panel having an upper electrode layer and a lower electrode layer and a plurality of color filters, including a red color filter, a green color filter and a blue color filter, to selectively filter white light; and a driver for driving the upper and lower electrode layers of the LCD panel to interpose non-display periods between display periods for displaying a desired color by mixing a combination of red light, green light and blue light, wherein during non-display periods, the driver drives the upper and lower electrode layers to display white light, which includes all of the red, green and blue light.

According to another aspect of the invention, there is provided a method for driving an LCD including a driver and an LCD panel having an upper electrode layer and a lower electrode layer and a plurality of color filters, including a red color filter, a green color filter and a blue color filter, to selectively filter white light, including driving the upper and a lower electrode layers of the LCD panel by the driver to interpose non-display periods between display periods for displaying a desired color by mixing a combination of red light, green light and blue light, wherein during non-display periods, the driver drives the upper and lower electrode layers to display white light, which includes all of the red, green and blue light.

Preferably, during non-display periods, the driver drives the upper and lower electrode layers to display white light, which includes all of the red, green and blue light and none of the red, green and blue light at different, distinct time periods.

The plurality of color filters may be either transmissive color filters attached to an upper portion of the LCD panel or reflective color filters attached to a lower portion of the LCD panel.

### BRIEF DESCRIPTION OF THE DRAWINGS

The above and other features and advantages of the present invention will become more apparent to those of ordinary skill in the art by describing in detail a preferred embodiment thereof with reference to the attached drawings in which:
FIG. 1 is a graph illustrating a display method of a conventional LCD;
FIG. 2 illustrates a sectional view showing a reflective LCD including a reflective color filter according to a preferred embodiment of the present invention;
FIG. 3 illustrates a schematic view for showing a part of an LCD panel to illustrate a driving method of the reflective LCD of FIG. 2;
FIGS. 4 and 5 are graphs to illustrate a display method of the reflective LCD of FIG. 2; and
FIG. 6 illustrates a sectional view showing a reflective LCD including a transmissive color filter according to an alternate embodiment of the present invention.

### DETAILED DESCRIPTION OF THE INVENTION

Korean Patent Application No. 2002-43413, filed on July 23, 2002, and entitled: "Reflective Liquid Crystal Display and Driving Method Thereof" is incorporated by reference herein in its entirety.

The present invention will now be described more fully hereinafter with reference to the accompanying drawings, in which a preferred embodiment of the invention is shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

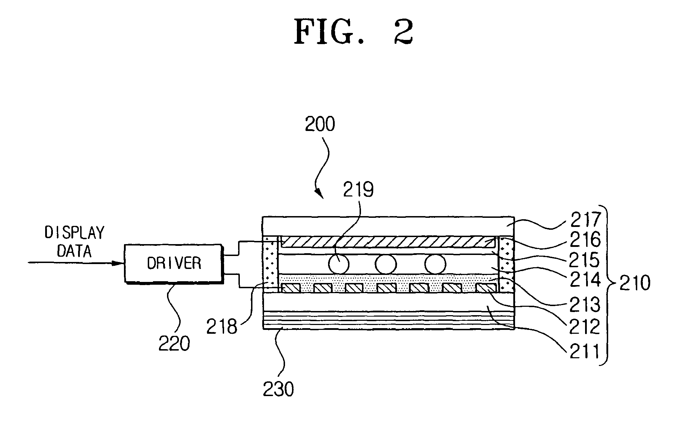

FIG. 2 illustrates a sectional view showing a reflective LCD including reflective color filters according to a preferred embodiment of the present invention.

As shown in FIG. 2, a reflective LCD 200 includes an LCD panel 210, a driver 220, and a reflective color filter 230.

The LCD panel 210 includes a lower substrate 211, a lower electrode layer 212, a lower orientation-film 213, a liquid crystal layer 214, an upper orientation-film 215, an upper electrode layer 216, an upper substrate 217, a sealing member 218, and a plurality of spacers 219.

The lower and upper substrates 211 and 217 are preferably made of transparent materials, such as a glass or transparent synthetic resin.

The lower and upper electrode layers 212 and 216 are preferably made of well known transparent conductive materials, for example, an ITO ("Indium Tin Oxide") transparent electrode material. On the lower and upper electrode layers 212 and 216, which are arranged in an orthogonal direction with respect to one another, there are formed a plurality of electrodes at each overlapping point of the lower and upper electrode layers 212 and 216. The overlapping points correspond to pixels of each color.

The liquid crystal layer 214 is preferably filled with a liquid crystal material.

The lower and upper orientation-films 213 and 215 are preferably made of various known orientation materials, such as polyimide, polyvinyl alcohol, nylon, polyvinyl acetates and the like. The lower and upper orientation-films 213 and 215 are rubbing processed at a predetermined angle using a rubbing material, such as a cloth.

The sealing member 218 prevents the liquid crystal from leaking out.

The plurality of spacers 219 are disposed to maintain a uniform gap in the liquid crystal layer 214.

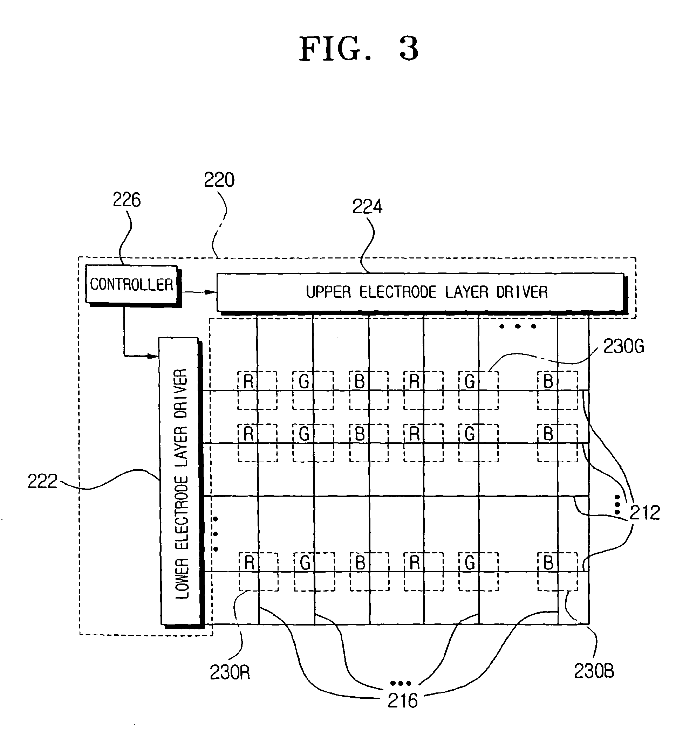

FIG. 3 illustrates a schematic view for showing a part of an LCD panel to illustrate a driving method of the reflective LCD of FIG. 2.

Referring to FIG. 3, the driver 220 includes a lower electrode layer driver 222, an upper electrode layer driver 224 and a controller 226.

The driver 220 drives the lower and upper electrode layers 212 and 216 of the LCD panel 210 to display data according to each of red, green and blue light.

The lower electrode layer driver 222 is electrically connected to the lower electrode layer 212. The upper electrode layer driver 224 is electrically connected to the upper electrode layer 216.

The controller 226 controls the lower and upper electrode layer drivers 222 and 224 according to display data. More particularly, the controller 226 controls the lower and upper electrode layer drivers 222 and 224 to interpose non-display periods between display periods for displaying a desired color by mixing a combination of red, green and blue light. During the non-display periods, all of the red, green and blue light, i.e., white light, and none of the red, green and blue light is displayed at different, distinct time periods.

The reflective color filter 230 includes a plurality of red color filter, green filter , and blue color filter , 230R, 230G and 230B, respectively. The locations of the plurality of color filter 230R, 230G and 230B corresponds to the positions of color pixels. The positions of the color pixels correspond to points where the lower and upper electrode layers 212 and 216 overlap.

The color filter 230R, 230G and 230B of the reflective color filter 230 may be made of photonic crystals, which are alternate arrays of dielectrics. The color filter 230R, 230G and 230B may also be made of dielectrics having different indices of refraction.

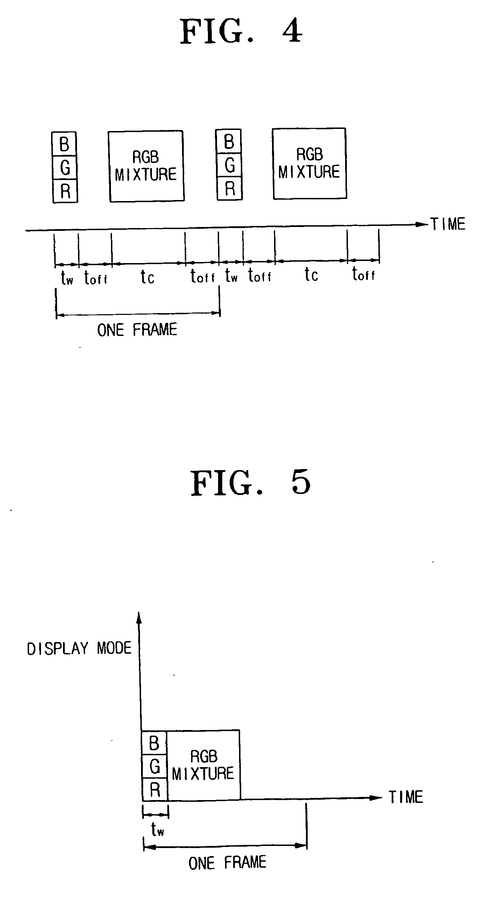

FIGS. 4 and 5 are graphs to illustrate a display method of the reflective LCD of FIG. 2. Referring to FIG. 4, a horizontal axis represents time in which a red, a green and a blue light are displayed driven by the driver 220. Time "t_{C}" represents a display period in which the red, green and blue light are mixed to display desired color data. A non-display period is consist of "t_{W}" and "t_{off}". Time "t_{W}" represents a part of non-display period in which all of the color light are mixed to display white light. Time "t_{off}" represents the other part of a non-display period in which none of the colors of light are displayed. During time period "t_{off}" a reset step of discharging electric charges accumulated at the LCD panel 210 during time periods t_{C} or t_{W} is performed.

Preferably, "t_{W}" is adapted to be shorter than "t_{C}." Preferably, "t_{off}" is adjusted in accordance with "t_{C}", and "t_{off}" may be equal to, or different from "tic"

Referring to FIG. 5, one frame is formed as the light is, under the control of the driver 220, incident on and reflected from the reflective color filter 230 in the order of initially white light and then a desired color mixture of the red, green and blue light.

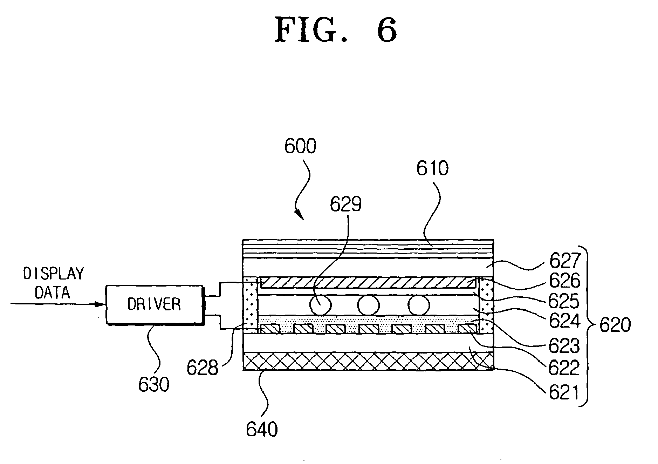

FIG. 6 illustrates a sectional view showing a reflective LCD including a transmissive color filter according to an alternate embodiment of the present invention.

Referring to FIG. 6, the reflective LCD 600 includes a transmissive color filter 610, a LCD panel 620, a driver 630 and a reflecting plate 640.

The transmissive color filter 610 includes color filter cells (not shown) corresponding to positions of respective color pixels. The positions of color pixels are points where a lower electrode layer 622 and an upper electrode layer 626, which will be described later, overlap. In order to display an image having a clear resolution, a light transmittance of the transmissive color filter 610 is a very important factor.

The LCD panel 620 includes a lower substrate 621, a lower electrode layer 622, a lower orientation-film 623, a liquid crystal layer 624, an upper orientation-film 626, an upper electrode layer 626, an upper substrate 627, a sealing member 628, and a plurality of spacers 629.

The structures and functions of the LCD panel 620 and the driver 630 are sufficiently similar to the LCD panel 210 and the driver 220 of FIG. 2 so that a detailed description thereof will not be repeated.

Referring to FIGS. 5 and 6, the driver 630 drives the lower and upper electrode layer drivers 622 and 626 to interpose non-display periods ("t_{off}" and "t_{W}") between data display periods "t_{C}" for displaying a desired color by mixing red, green and blue light. The non-display period includes "t_{W}", during which time period all of the red, green and blue light, i.e. white light, is displayed and "t_{off}", during which time period none of the red, green and blue light are displayed.

The reflecting plate 640 reflects the incident white, red, green and blue light from the lower and upper electrode layers 622 and 626 driven by the driver 630. Referring to FIG. 5, one frame is formed as the light is incident on and reflected from the reflective plate 640 in the order of white light, and then, a mixture of the red, green and blue light.

The reflective LCDs 200 and 600 in accordance with the embodiments of the present invention are able to adjust the luminance and overall amount of light under the control of the drivers 220 and 630.

In detail, the drivers 220 and 630 control the periods of data display time of the data display regions, which are the overlapping points of the lower and upper electrode layers 212 and 216, to adjust the luminance of the pixels. The luminance of the pixels is determined by the ratio of data display period "t_{C}" displaying a desired color by mixing the respective red, green and blue light and non-display periods "t_{off}" displaying none of the light. The drivers 220 and 630 control the periods of displaying the white light "t_{w}" to regulate the brightness of the whole image, or amount of light.

A reflective LCD and the driving method thereof according to an embodiment of the present invention interposes periods of displaying white light between the periods of displaying the desired color by mixing the red, green and blue light to obtain a desired luminance without a special design of the transmittance spectrum of the color filter. Further, a reflective LCD according to an embodiment of the present invention is able to adjust the luminance according to circumstances.

Preferred embodiments of the present invention have been disclosed herein and, although specific terms are employed, they are used and are to be interpreted in a generic and descriptive sense only and not for purpose of limitation. Accordingly, the present invention as set forth indefined in the following claims.

## Claims

1. A reflective liquid crystal display, referred to hereafter as an LCD, comprising an LCD panel and its driver,
the LCD panel having an upper electrode layer and a lower electrode layer and a plurality of color filters, including a red color filter, a green color filter and a blue color filter, to selectively filter white light;
**characterized in that**
the driver is adapted for driving the upper and lower electrode layers of the LCD panel to interpose non-display periods between display periods for displaying a desired color by mixing a combination of red filtered light, green filtered light and blue filtered light, wherein during non-display periods, the driver drives the upper and lower electrode layers to display white light, which includes all of the red, green and blue filtered lights.

2. The LCD according to claim 1, wherein during non-display periods, the driver drives the upper and lower electrode layers to display filtered white light, which includes all of the red, green and blue filtered lights, said filtered lights filtered for different time periods and at different time intervals during the non-display periods.

3. The LCD according to claim 1, wherein the plurality of color filters are transmissive color filters attached to an upper portion of the LCD panel.

4. The LCD according to claim 3, further comprising a reflecting plate.

5. The LCD according to claim 1, wherein the plurality of color filters are reflective color filters attached to a lower portion of the LCD panel.

6. The LCD according to claim 5, wherein the red color filter, the green color filter, and the blue color filter of the reflective color filter are made of photonic crystals, which are alternate arrays of dielectrics.

7. The LCD according to claim 5, wherein the red color filter, the green color filter, and the blue color filter of the reflective color filter are made of dielectrics having different indices of refraction.

8. A method for driving a reflective liquid crystal display (LCD) including a driver and an LCD panel having an upper electrode layer and a lower electrode layer and a plurality of color filters, including a red color filter, a green color filter and a blue color filter, adapted to selectively filter white light,
**characterized in that**
said method comprises the step of driving the upper electrode layer and the lower electrode layer of the LCD panel by the driver by interposing non-display periods between display periods for displaying a desired color by mixing a combination of red filtered light, green filtered light and blue filtered light, wherein during non-display periods, the driver drives the upper and lower electrode layers to display white filtered light, which includes all of the red, green and blue filtered lights.

9. The method according to claim 8, further comprising:
the step of displaying filtered white light, which includes all of the red, green and blue filtered lights, said filtered lights filtered for different time periods and at different time intervals during the non-display periods.

10. The method according to claim 8, wherein the plurality of color filters are transmissive color filters attached to an upper portion of the LCD panel.

11. The method according to claim 8, wherein the plurality of color filters are reflective color filters attached to a lower portion of the LCD panel.

## Patentansprüche

1. Reflektive Flüssigkristallanzeigevorrichtung (LCD), die einen LCD-Bildschirm und seine Ansteuereinrichtung umfasst,
wobei der LCD-Bildschirm eine obere Elektrodenschicht und eine untere Elektrodenschicht sowie eine Vielzahl von Farbfiltern aufweist, die ein Rot-Farbfilter, ein Grün-Farbfilter und ein Blau-Farbfilter enthalten, um selektiv weißes Licht zu filtern;
**dadurch gekennzeichnet, dass**
die Ansteuereinrichtung so eingerichtet ist, dass sie die obere und die untere Elektrodenschicht des LCD-Bildschirms so ansteuert, dass Nicht-Anzeigeperioden zwischen Anzeigeperioden eingefügt werden, um durch Mischen einer Kombination aus rot-gefiltertem Licht, grün-gefiltertem Licht und blau-gefiltertem Licht eine gewünschte Farbe anzuzeigen, wobei während der Nicht-Anzeigeperioden die Ansteuereinrichtung die obere und die untere Elektrodenschicht so ansteuert, dass sie weißes Licht anzeigen, das das gesamte rot-, grün- und blau-gefilterte Licht enthält.

2. LCD nach Anspruch 1, wobei während der Nicht-Anzeigeperioden die Ansteuereinrichtung die obere und die untere Elektrodenschicht so ansteuert, dass sie gefiltertes weißes Licht anzeigen, dass das gesamte rot-, grün- und blau-gefilterte Licht enthält, wobei das gefilterte Licht über unterschiedliche Zeiträume und in unterschiedlichen Zeitintervallen während der Nicht-Anzeigeperioden gefiltert wird.

3. LCD nach Anspruch 1, wobei die Vielzahl von Farbfiltern transmissive Farbfilter sind, die an einem oberen Abschnitt des LCD-Bildschirms angebracht sind.

4. LCD nach Anspruch 3, die des Weiteren eine reflektierende Platte umfasst.

5. LCD nach Anspruch 1, wobei die Vielzahl von Farbfiltern reflektive Farbfilter sind, die an einem unteren Abschnitt des LCD-Bildschirms angebracht sind.

6. LCD nach Anspruch 5, wobei das Rot-Farbfilter, das Grün-Farbfilter und das Blau-Farbfilter des reflektiven Farbfilters aus photonischen Kristallen bestehen, die abwechselnde Felder aus dielektrischen Materialien sind.

7. LCD nach Anspruch 5, wobei das Rot-Farbfilter, das Grün-Farbfilter und das Blau-Farbfilter des reflektiven Farbfilters aus dielektrischen Materialien mit unterschiedlichen Brechungsindizes bestehen.

8. Verfahren zum Ansteuern einer reflektiven Flüssigkristall-Anzeigevorrichtung (LCD), die eine Ansteuereinrichtung sowie einen LCD-Bildschirm mit einer oberen Elektrodenschicht und einer unteren Elektrodenschicht sowie einer Vielzahl von Farbfiltern enthält, die ein Rot-Farbfilter, ein Grün-Farbfilter und ein Blau-Farbfilter enthalten, die so eingerichtet sind, dass sie selektiv weißes Licht filtern,
**dadurch gekennzeichnet, dass**
das Verfahren den Schritt umfasst, in dem die obere Elektrodenschicht und die untere Elektrodenschicht des LCD-Bildschirms mit der Ansteuereinrichtung angesteuert werden, indem Nicht-Anzeigeperioden zwischen Anzeigeperioden eingefügt werden, um durch Mischen einer Kombination von rot-gefiltertem Licht, grün-gefiltertem Licht und blau-gefiltertem Licht eine gewünschte Farbe anzuzeigen, wobei während der Nicht-Anzeigeperioden die Ansteuereinrichtung die obere und die untere Elektrodenschicht so ansteuert, dass sie weißes gefiltertes Licht anzeigen, das das gesamte rot-, grün- und blau-gefilterte Licht enthält.

9. Verfahren nach Anspruch 8, das des Weiteren umfasst:
den Schritt des Anzeigens von gefiltertem weißen Licht, das das gesamte rot-, grün- und blau-gefilterte Licht enthält, wobei das gefilterte Licht über unterschiedliche Zeiträume und in unterschiedlichen Zeitintervallen während der Nicht-Anzeigeperioden gefiltert wird.

10. Verfahren nach Anspruch 8, wobei die Vielzahl von Farbfiltern transmissive Farbfilter sind, die an einem oberen Abschnitt des LCD-Bildschirm angebracht sind.

11. Verfahren nach Anspruch 8, wobei die Vielzahl von Farbfiltern reflektive Farbfiltern sind, die an einem unteren Abschnitt des LCD-Bildschirms angebracht sind.

## Revendications

1. Affichage réflectif à cristaux liquides, soit Liquid Crystal Display, dénommé ci-après LCD, comprenant un panneau LCD et son pilote,
le panneau LCD ayant une couche électrode supérieure et une couche électrode inférieure et une pluralité de filtres de couleur, y compris un filtre de couleur rouge, un filtre de couleur verte et un filtre de couleur bleue, pour filtrer sélectivement la lumière blanche;
**caractérisé en ce que**
le pilote est adapté pour commander les couches électrodes supérieure et inférieure du panneau LCD de manière à interposer des périodes de non affichage entre des périodes d'affichage pour afficher une couleur désirée en mélangeant une combinaison de lumière filtrée rouge, de lumière filtrée verte et de lumière filtrée bleue, dans lequel, durant les périodes de non affichage, le pilote commande les couches électrodes supérieure et inférieure pour afficher de la lumière blanche, qui comprend les lumières filtrées rouge, verte et bleue ensemble.

2. LCD selon la revendication 1 dans lequel, durant les périodes de non affichage, le pilote commande les couches électrodes supérieure et inférieure pour afficher de la lumière filtrée blanche, qui comprend les lumières filtrées rouge, verte et bleue ensemble, lesdites lumières filtrées étant filtrées pendant différentes durées et à différents intervalles temporels au cours des périodes de non affichage

3. LCD selon la revendication 1, dans lequel les filtres de couleur de la pluralité sont des filtres de couleur transmissifs fixés à une partie supérieur du panneau LCD.

4. LCD selon la revendication 3, comprenant en outre une plaque réfléchissante.

5. LCD selon la revendication 1, dans lequel les filtres de couleur de la pluralité sont des filtres de couleur réflectifs fixés à une partie inférieure du panneau LCD.

6. LCD selon la revendication 5, dans lequel le filtre de couleur rouge, le filtre de couleur verte, et le filtre de couleur bleue du filtre de couleur réflectif sont constitués de cristaux photoniques, qui sont des réseaux alternés de diélectriques.

7. LCD selon la revendication 5, dans lequel le filtre de couleur rouge, le filtre de couleur verte, et le filtre de couleur bleue du filtre de couleur réflectif sont constitués de diélectriques ayant différents indices de réfraction.

8. Procédé pour piloter un affichage à cristaux liquides réflectif (LCD) comprenant un pilote et un panneau LCD ayant une couche électrode supérieure et une couche électrode inférieure ainsi qu'une pluralité de filtres de couleur, y compris un filtre de couleur rouge, un filtre de couleur verte et un filtre de couleur bleue, adapté pour filtrer sélectivement de la lumière blanche,
**caractérisé en ce que**
ledit procédé comprend l'étape consistant à commander la couche électrode supérieure et la couche électrode inférieure du panneau LCD à l'aide du pilote en interposant des périodes de non affichage entre des périodes d'affichage de manière à afficher une couleur désirée en mélangeant une combinaison de lumière filtrée rouge, de lumière filtrée verte et de lumière filtrée bleue, dans lequel, durant les périodes de non affichage, le pilote commande les couches électrodes supérieure et inférieure pour afficher de la lumière filtrée blanche, qui comprend les lumières filtrées rouge, verte et bleue ensemble.

9. Procédé selon la revendication 8, comprenant en outre:
l'étape d'affichage de lumière filtrée blanche, qui comprend les lumières filtrées rouge, verte et bleue ensemble, lesdites lumières filtrées étant filtrées pendant différentes durées et à différents intervalles temporels au cours des périodes de non affichage

10. Procédé selon la revendication 8, dans lequel les filtres de couleur de la pluralité sont des filtres de couleur transmissifs fixés à une partie supérieure du panneau LCD.

11. Procédé selon la revendication 8, dans lequel les filtres de couleur de la pluralité sont des filtres de couleur réflectifs fixés à une partie inférieure du panneau LCD.
